# EUROPEAN PATENT SPECIFICATION

(11) **EP 3 864 323 B1**
(45) Date of publication and mention of the grant of the patent: **11.01.2023**
(21) Application number: 19871807.4
(22) Date of filing: 10.10.2019
(51) Int. Cl.: F16H 61/66, F16H 15/00

(54) **A COLLABORATIVE ROBOT JOINT WITH CONTINUOUSLY VARIABLE TRANSMISSION**
GEMEINSCHAFTLICHE ROBOTERVERBINDUNG MIT STUFENLOS VERÄNDERBARER ÜBERSETZUNG
ARTICULATION DE ROBOT COLLABORATIVE À TRANSMISSION À VARIATION CONTINUE

(30) Priority: 10.10.2018 TR 201815031
(43) Date of publication of application: 18.08.2021
(73) Proprietor: IZMIR YÜKSEK TEKNOLOJI ENSTITÜSÜ, 35430 Izmir (TR)
(72) Inventor: DEDE, Mehmet Ismet Can, Izmir (TR); MOBEDI, Emir, Izmir (TR)
(86) International application number: PCT/TR2019/050853
(87) International publication number: WO 2020/076277

(56) References cited:
- EP-A1- 2 719 923
- EP-A1- 2 881 619
- JP-A- S61 160 659
- JP-U- S63 133 663
- US-A- 4 061 045

## Description

### Technical Field

The invention is related to a continuously variable transmission system.

The invention is particularly related to the usage of a power transmission method named as the continuously variable transmission system in the human-robot interfaces. The power transmission can be changed not in a stable ratio but in a theoretically determined limit in a non-staged manner together with said systems. It is used for arranging the bilateral physical interaction between human-robot. The continuously variable transmission systems are used in many different fields such as automotive, robotic, aviation and machine fields. The target field is the systems which included physical human-robot interaction. In general these types of robots are named as the collaborative robots.

### State of the Art

Today, in the design of unique SDA system; criteria such as back driving, working field, impedance interval, independent control of the location and stiffness and ability of damping in sudden physical crashes are taken into consideration. Transmission is performed by means of a wheel in typical SDA systems. However, since the wheel cannot be able to perform a holonomic motion, it is impossible to provide stage change by means of the wheel without rotating conical variators. For this reason, instead of wheel a sphere is used in our invention of unique SDA design.

In the present state of the art, the continuously variable transmission mechanisms formed by using operating principles of the planet gear systems are encountered in the literature¹-³. These systems have the potential to change the outlet torque without applying any control algorithm, with the help of the mechanical design, in a non-staged manner. A constant engine torque shall be given in order to enter the system. In addition to these when the outlet resistance is changed, the system has the ability to be adopted to said resistance mechanically. Although the mechanism has a simple structure in terms of kinematic view, the outlet torque and the outlet position cannot be controlled in an independent manner. Also since the inertias of the gear systems are high, it is disadvantageous to use in human-robot interactions in terms of the back driving criteria.

In spheric continuously variable transmission systems, a point contact is enabled to the sphere from 4 different points. The outlet speed is adjusted by changing the rotational axis of the sphere by means of two inlet variators and two outlet variators ⁴.

Another continuously variable transmission system is a robot which is named as "cobot" in the literature and designed for haptic application⁵⁻⁶. In the literature for this system, a patent is encountered⁷. In said system, the transmission is enabled with the help of dry friction in which the elements named as the continuously variable transmission wheels are contacted to a cylinder. Each wheel which is located around the cylinder is coupled to the end point by means of a fastener. The contact angle with the cylinder is changed by means of directing the wheel with an engine and the linear outlet stiffness is adjusted. Since the system has a complex mechanical structure and the wheels emanate from said cylinder if wheels are adjusted at zero degree (low stiffness values), these lead to disadvantages.

The operating principle of the general continuously variable transmission (SDA) systems is formed by means of locating two variators with conical shape parallel to each other. The inlet torque is given through the inlet variators and stage change is performed by means of a separate engine. The transmission between the variators is enabled by means of a belt, chain or dry friction⁸. Since contact points of the conical variators are changed during stage change, the outlet torque and speed are also changed. This type of systems is used in the transmission of the automobiles. However their usage in human-robot interfaces is no seen in the literature. The reason for this is that, these systems used in the automobiles are operated in an unidirectional manner⁹. Another reason is that, the mechanism required to be designed for enabling the stage change has a complex structure ⁴. In addition to these, when we consider the joint designs which are aimed to be used in the human-robot interfaces; the main criteria shall be provided such as back driving, controlling the location and stiffness in an independent manner, damping sudden crashes and lightness etc. ¹⁰. In said general SDA systems, the location and stiffness cannot be controlled in an independent manner.

The determined technical problems of the present state of the art are as the following;
a. possible sudden crashes may not be damped by means of the joint in a mechanical manner,
b. transmission ratio may not be changed when the outlet location of the joint is constant,
c. a unidirectional transmission may be enabled. By means of a unidirectional transmission, the robot can drive the human back or the human can drive the robot back but a drive in the opposite direction is not possible.

In the current designs, power transmission is provided by means of the planet gear systems and the variators. The gear systems exhibit poor performance at the damping point of the sudden physical forces. The second sphere is added to the system in a manner such that it contacts beneath the variators within our invention in respect to the unidirectional transmission problem encountered in the literature.

Again patent document No CA1043132 (A) is related to a continuously variable drive system which comprises a drive and a shaft which is driven in the control spheres that move together with the coaxial rotating friction surfaces which is in coaxial arrangement and in rotating surfaces form. A control element is combined with each control unit by means of the bearings, all control elements abut on a common adjusting ring. Each control element is formed by means of a central, a circular abutment surface which coincides with the center of the sphere and each control element has a part which is joined with a recess in the adjusting ring, shifting the adjusting ring in an axial manner leads to continuous change in the transmission.

Again, patent document No US2018119811 (A1) is related to the devices and methods used in power transmission in motor vehicles. The torque is divided into two or more torque path and thus the power is transmitted in a more smooth and effective manner. Here, it has a variators assembly which comprises a rotatable power source and a first traction ring assembly. Again it comprises a variable assembly which has a second traction ring in contact with a plurality of spheres. There is a variator of this assembly that includes an operable rotatable shaft. Here each sphere of a plurality of spheres has an inclinable rotational axis. The variator assembly is coaxial with the rotational shaft and also comprises and a first axial thrust bearing coupled to a rotatable shaft and a first traction ring assembly and a second axial thrust bearing coupled to a rotatable shaft and a second traction ring assembly.

Again, the patent document No US2018119810 (A1) is related to a non-staged variable transmission having a sphere type continuously variable transmission. A main shaft; a power transmission which comprises a variator that has a plurality of first sphere is disclosed. Each sphere is equipped with a rotatable rotation axis. Said each sphere is in contact with a first traction ring assembly and a second traction ring assembly and each sphere is connected operationally to the first carrier assembly. A first planet gear set having the first ring gear comprises a first planet bearer which supports a plurality of planet gear coupled to the first ring gear and a first sun gear set which is coupled to the first plurality of the first gear tooth; and a second planet gear set having a second ring gear, a second planet bearer which supports a plurality of planet gear coupled to the second ring gear and a second sun gear set coupled to the second plurality of the second planet gears.

Again in document No KR20170010608 (A), a continuously variable transmission device for the robot is disclosed. Said invention is related to a continuously variable transmission device for a robot and particularly is related to a continuously variable transmission device for a robot which allows the transmission process of a robot which has a simple and compact structure and is movable.

Again in document No JPS61160659A is related to a continuously variable transmission. Said invention arranges a cone-shaped driving wheel, connected with an electric motor, and a cone-shaped driven wheel, to which power is transmitted through a sphere, so that their large and small contour sides are placed in an equal side. In the invention, a magnet is used to reduce the friction force inside the transmission.

### Aim of the Invention

An aim of the invention is to protect both the user and the actuator from excessive loads by means of creating a natural force limit in the joint by transmitting force via friction in order to eliminate the disadvantages included in the present state of the art.

Another aim of the invention is to change the outlet location and cycle ratio by means of the designed carrier mechanism independent from each other.

Another aim of the invention is to provide the stage change in a faster and easier manner by making holonomic movement by means of the spheres.

In order to fulfill the abovementioned aims, the invention is a continuously variable transmission collaborative robot joint according to the independent claim.

The dependent claims show further advantageous embodiments of the invention.

### Description of Figures

Figure 1 is an assembly perspective view of the invention,
Figure 2 is a disassembly perspective view of the invention,
Figure 3 is a disassembled perspective view of the carrier mechanism of the invention,
Figure 4 is a front view of the spring forces in the proposed solution,
Figure 5 is a side view showing the normal forces between the sphere and the conical variators in the proposed solution,
Figure 6 is the drawing in which a clockwise transmission is performed,
Figure 7 is the drawing in which the counterclockwise transmission is performed,

### Description of Reference Numbers

| Ref. No. | Ref. Description |
|---|---|
| F1, F2 | Forces applied by means of the compression spring |
| P1, P2 | Friction forces |
| E | User force |
| N1, N2, N3, N4 | Surface normal forces |
| SY | Clockwise |
| SYT | Counter clockwise |
| 1 | Lower sphere |
| 2 | Upper sphere |
| 3 | Bearing |
| 31 | Inner ring |
| 32 | Outer ring |
| 4 | Stoned pin |
| 5 | Supportive connecting piece |
| 6 | Compression spring |
| 7 | Adjusting screw (changes pressure of the spring) |
| 8 | Carrying structure |
| 81 | Housing |
| 9 | Linear slide |
| 10 | Inlet/ Outlet conical variator |
| 11 | Ball screw |
| 12 | Fixed apparatus where conical variators are supported between bearings |
| 13 | Fixed apparatus where the carrying structure is supported between bearings |
| 14 | Fixed plate |
| 15 | Carrying mechanism |

### Detailed Description of the Invention

The invention is the usage of a power transmission technique named as continuously variable transmission system in the human-robot interfaces. The invention is a continuously variable transmission collaborative robot joint.

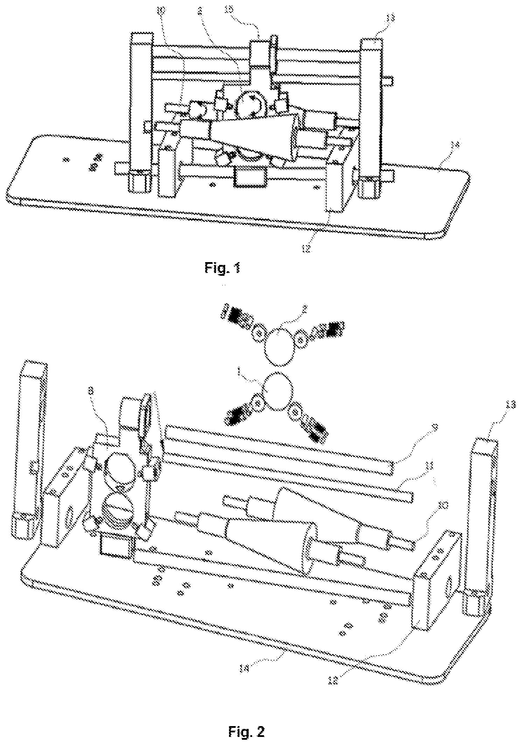

In Figure 1, an assembly perspective view of the invention is shown. Inlet/outlet conical variators (10) are located in an axial direction on the fixed apparatus where conical variators are supported between bearings (12). The lower sphere (1) and the upper sphere (2) mounted on the carrying mechanism (15) facilitate the forward-backward movement of the carrying mechanism (15) in a manner such that they contact to the both of the inlet/outlet conical variators (10). The forward-backward movement of the carrying mechanism (15) can be performed by means of any linear actuator.

In Figure 2 the assembly of the linear actuator system formed by means of the ball screw (11) and the linear slides (9) is shown. A Fixed apparatus where conical variators are supported between bearings (12) and a fixed apparatus where the carrying structure is supported between bearings (13) are connected on the fixed plate (14). The linear slides (9) and the ball screw (11) are connected between the fixed apparatuses where the carrying structure is supported between bearings (13). The carrying mechanism (15) is supported on the linear slide (9) between bearings, and connected to the linear slides (9) and the ball screw (11) in order to make linear movement by means of the activation of the ball screw (11).

According to the invention drawing in terms of the assembly given in Figure 1, by changing the contact points of the spheres (1, 2) on the inlet/outlet conical variators (10), provide a stage change by means of the point type of contact between bearings (3) and the spheres (1 , 2). The transmission between the inlet/outlet conical variators (10) is performed by means of the rotation of the spheres (1, 2) around the linear actuator axis. During the forward-backward movement of the spheres (1, 2) by means of the linear actuator, the spheres roll in a perpendicular axis to the direction of progress. Therefore the required rotational axis of the sphere for changing the transmission stage is perpendicular to the required rotational axis of the sphere for the transmission. As a result without changing the angular locations of the inlet/outlet conical variators (10), the point type of contact between bearings (3) is provided to be changed. In the present state of the art, the wheel which is used in place of the sphere (1, 2) cannot be change the point type of contact between bearings (3) without changing the angular locations of the inlet/outlet conical variators (10). The main reason for this is that during the transmission stage change, the wheel does not rotate around the axis of the linear actuator and it is required to be shifted by means of friction. In order to minimize the frictional effects, during transmission stage change, the wheel is rotated around its own axis and in this case the angular locations of the conical variators are changed simultaneously during transmission stage change.

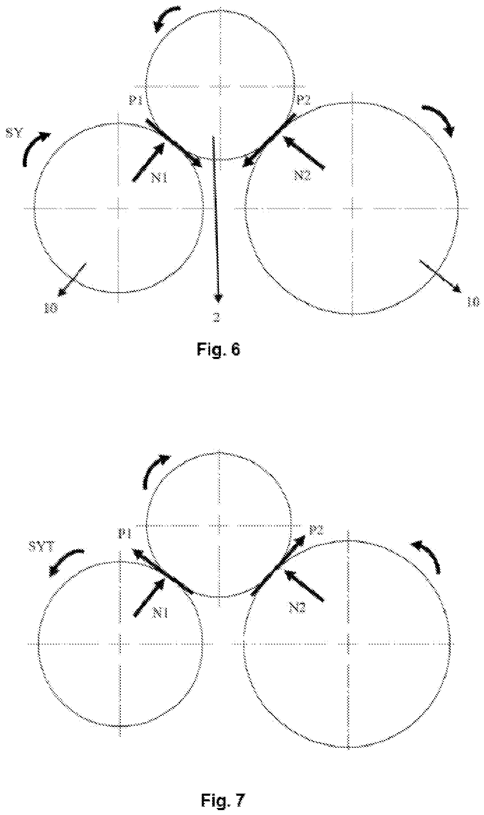

Using only the upper sphere (2) in the system is shown in Figures 6 and 7. As it is shown in Figure 6, since the friction forces (P1, P2) are in the lower direction which is formed during the clockwise (SY) rotation of the inlet-outlet conical variators (10), the transmission process is guaranteed by means of increasing the normal forces (N1, N2) on the friction surface formed between the conical variators (10) and the sphere (2). However as it is shown in Figure 7, since the friction forces (P1, P2) are in the upper direction which is formed during the counterclockwise (SYT) rotation of the inlet-outlet conical variators (10), the transmission process cannot be guaranteed by means of decreasing the normal forces (N1, N2) on the friction surface formed between the conical variators (10) and the sphere (2).

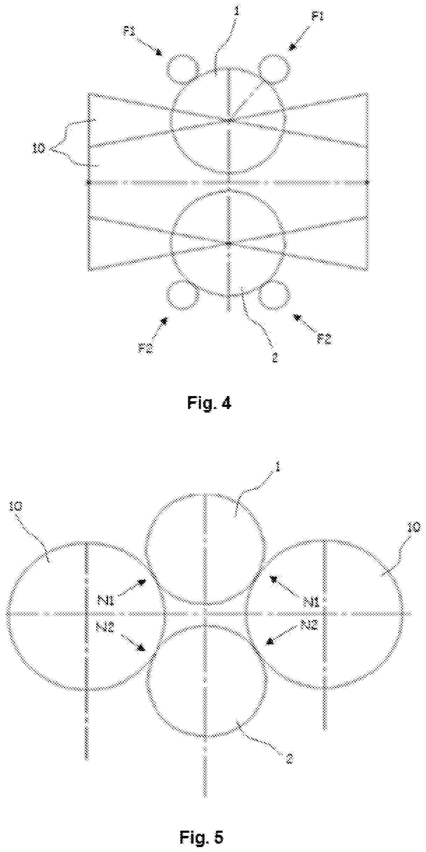

In order to solve this problem, the solution with two spheres (1, 2) shown in Figure 5 forms the basis of this invention. In this case, when the inlet/outlet conical variators (10) rotate clockwise, on one hand the normal forces (N1, N2) formed between the upper sphere (2) and the inlet/outlet conical variators (10) increase, on the other hand the normal forces (N3, N4) formed between the lower sphere (1) and the inlet/outlet conical variators (10) decrease. On the contrary; when the inlet/outlet conical variators (10) rotate counter clockwise, on one hand the normal forces (N1, N2) formed between the upper sphere (2) and the inlet/outlet conical variators (10) decrease, on the other hand the normal forces (N3, N4) formed between the lower sphere (1) and the inlet/outlet conical variators (10) increase. Therefore an equal transmission can be obtained in both directions. Another main aspect of the invention is to transmit the torques with upper values which are equal in both directions.

In order to limit transmitted torque, the normal forces on the friction surface formed between the inlet/outlet conical variators (10) and the spheres (1, 2) are required to be adjustable. As it is given in Figure 4, the compression forces (F1, F2) on the spheres and the normal forces formed on the friction surface can be adjustable. Therefore the inlet/outlet torque which exceeds the threshold value is not transmitted to the other conical variator. This condition can be used for taking safety measure during a high level impact in the human-robot interfaces.

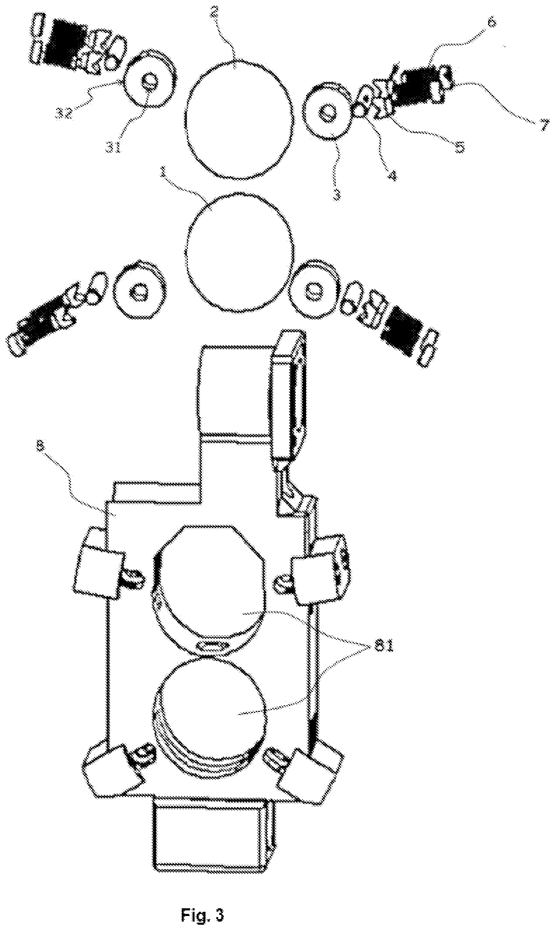

In Figure 3, the assembly of the carrying mechanism in which the inlet/outlet torque threshold can be adjusted in shown. After the bearings (3) which will form the compression forces (F1, F2) by means of a point contact on the spheres (1, 2) are fitted to the slots on the carrying structure (8), then the stoned pins (4) are fitted to the inner rings (31) of the bearings (3). The bearings (3) contact to the spheres (1, 2) over the outer rings (32). By means of this contact type, the spheres (1, 2) can be able to perform the rotation in two directions in order to provide transmission and to change the transmission ratio in a manner such that it is only subject to at least an opposite resistance. The supportive connecting pieces (5) are mounted on the stoned pins (4) which can be able to move within the slot in the forward-backward directions. The compression springs (6) are located on the supportive connecting pieces (5) in order to make pressure on the stoned pins. In order to adjust the compression forces applied by means of the compression springs (6), the required compression process is performed by means of the adjusting screws (7). The assembly of the spheres (1, 2) on the housings (81) on the carrying structure (8) is made subsequent to the assembly of the abovementioned bearing (3). By means of the compression forces applied by the bearing (3) assembly, the spheres (1, 2) are caged in the housing (81). The third important aspect of the invention is that; adjustment of the compression forces (F1, F2) by means of the adjusting screws and thus determining the torque upper levels according to application requirements which is equal in both directions.

## Claims

1. A collaborative robot joint with continuously variable transmission, comprising:
• a carrying structure (8),
• spheres (1 , 2 are caged in housings (81) of the carrying structure (8)
• a compression spring (6) which are mounted at the rear portion of bearings (3) that push the spheres (1,2) towards conical variators (10), the bearings (3) used at the joining point of the spheres (1 , 2) and a carrying structure (8) ,
wherein the collaborative robot joint is configured to:
• imposing pressure onto two conical variators (10) from the lower and the upper points by means of the spheres (1, 2) in order to transmit rotational movement between the conical variators (10) on which friction surface is covered in order to form friction surface thereof,
• changing the frictional force between the spheres (1 , 2) and the friction surface of the conical variators (10) by changing the pretension of compression spring (6), which are pushing the spheres (1, 2) onto the conical variators (10),
providing a transmission ratio change by means of the contact between bearings (3) and the spheres (1 , 2);
• enabling linear movement opportunity to the sphere (1, 2).

2. A joint according to claim 1 , **characterized in that**, it comprises forming a friction surface on the conical variators in order to provide transmission between said spheres (1 , 2) and the conical variators (10).

3. A joint according to claim 1, **characterized in that**, it comprises stoned pins (4) which are fitted to bearings (3).

4. A joint according to claim 1, **characterized in that**; it comprises a supportive connecting piece (5) which is mounted at the rear portion of each pin (4).

5. A joint according to claim 1, **characterized in that**, it comprises an adjusting screw (7) for adjusting the pretension of the compression spring (6) according to the required value.

6. A joint according to claim 1, **characterized in that**, it comprises a carrying mechanism (15) which has spheres (1, 2) and a carrying structure (8).

7. A joint according to claim 1 , **characterized in that**, it comprises linear slides (9) which are joined with the carrying mechanism (15), are located on the upper portion and the lower portion.

## Patentansprüche

1. Kollaboratives Robotergelenk mit einem stufenlosen Getriebe,
umfassend:
• eine Trägerstruktur (8),
• Kugeln (1, 2), die in Gehäusen (81) der Trägerstruktur (8) untergebracht sind
• eine Druckfeder (6), die am hinteren Teil der Lager (3) montiert ist, die die Kugeln (1, 2) in Richtung der konischen Variatoren (10) drücken, die Lager (3) an der Verbindungsstelle zwischen den Kugeln (1, 2) und der Trägerstruktur (8) verwendet werden,
wobei das kollaborative Robotergelenk so ausgebildet ist, dass es:
• Ausübung eines Drucks auf zwei konische Variatoren (10) vom unteren und oberen Punkt mittels der Kugeln (1, 2), um eine Drehbewegung zwischen den konischen Variatoren (10) zu übertragen, auf denen eine Reibungsfläche bedeckt ist, um deren Reibungsfläche zu bilden,
• Veränderung der Reibungskraft zwischen den Kugeln (1, 2) und der Reibfläche der konischen Variatoren (10) durch Veränderung der Vorspannung der Druckfeder (6), die die Kugeln (1, 2) auf die konischen Variatoren (10) drückt,
• Bereitstellung einer Veränderung des Übertragungsverhältnisses durch den Kontakt zwischen den Lagern (3) und den Kugeln (1, 2);
• Ermöglichen einer linearen Bewegungsmöglichkeit zur Kugel (1,2)

2. Gelenk nach Anspruch 1, **dadurch gekennzeichnet, dass** es die Ausbildung einer Reibungsfläche auf den konischen Variatoren umfasst, um eine Übertragung zwischen den Kugeln (1, 2) und den konischen Variatoren (10) zu erreichen.

3. Gelenk nach Anspruch 1, **dadurch gekennzeichnet, dass** es gesteinigte Stifte (4) umfasst, die auf Lagern (3) angebracht sind.

4. Gelenk nach Anspruch 1, **dadurch gekennzeichnet, dass** es ein stützendes Verbindungsstück (5) umfasst, das am hinteren Teil eines jedes Stifts (4) montiert ist.

5. Gelenk nach Anspruch 1, **dadurch gekennzeichnet, dass** es eine Einstellschraube (7) zur Einstellung der Vorspannung der Druckfeder (6) auf den gewünschten Wert umfasst.

6. Gelenk nach Anspruch 1, **dadurch gekennzeichnet, dass** es einen Tragmechanismus (15) umfasst, der Kugeln (1, 2) und eine Trägerstruktur (8) aufweist.

7. Gelenk nach Anspruch 1, **dadurch gekennzeichnet, dass** es lineare Schlitten (9) umfasst, die mit dem Tragmechanismus (15) verbunden sind und die sich am oberen und unteren Teil befinden.

## Revendications

1. Un joint de robot collaboratif avec transmission à variation continue, comprenant ;
• une structure porteuse (8),
• des sphères (1, 2) qui sont encagées dans des logements (81) de la structure porteuse (8)
• un ressort de compression (6) qui est monté à la partie arrière de roulements (3) qui poussent les sphères (1, 2) vers des variateurs coniques (10), les roulements (3) utilisés au point de jonction des sphères (1 , 2) et une structure porteuse (8),
où le joint de robot collaboratif est configuré pour :
• imposer une pression sur deux variateurs coniques (10) depuis les points inférieur et supérieur au moyen des sphères (1, 2) afin de transmettre un mouvement de rotation entre les variateurs coniques (10) sur lesquels la surface de friction est recouverte afin de former surface de frottement de celui-ci,
• changer la force de frottement entre les sphères (1, 2) et la surface de frottement des variateurs coniques (10) en changeant la précontrainte du ressort de compression (6), qui pousse les sphères (1, 2) sur les variateurs coniques (10),
fournir un changement de rapport de transmission au moyen du contact entre les roulements (3) et les sphères (1, 2);
• permettre une opportunité de mouvement linéaire à la sphère (1, 2).

2. Joint selon la revendication 1, **caractérisé en ce qu'** il comprend la formation d'une surface de friction sur les variateurs coniques pour assurer la transmission entre lesdites sphères (1, 2) et les variateurs coniques (10).

3. Joint selon la revendication 1, **caractérisé en ce qu'**il comprend des goupilles noyées (4) qui sont emmanchées sur des roulements (3).

4. Joint selon la revendication 1, **caractérisé en ce qu'**il comprend une pièce de liaison de support (5) qui est montée à la partie arrière de chaque goupille (4).

5. Joint selon la revendication 1, **caractérisé en ce qu'**il comprend une vis de réglage (7) pour régler la précontrainte du ressort de compression (6) selon la valeur requise.

6. Joint selon la revendication 1, **caractérisé en ce qu'**il comprend un mécanisme porteur (15) qui comporte des sphères (1,2) et une structure porteuse (8).

7. Joint selon la revendication 1, **caractérisé en ce qu'**il comprend des glissières linéaires (9) qui sont solidaires du mécanisme porteur (15), situées sur la partie supérieure et la partie inférieure.
